# EUROPEAN PATENT SPECIFICATION

(11) **EP 2 430 306 B1**
(45) Date of publication and mention of the grant of the patent: **06.09.2017**
(21) Application number: 10703472.0
(22) Date of filing: 11.02.2010
(51) Int. Cl.: F03G 6/00, F01B 3/04, F01B 25/10, F01K 7/00, F01K 23/06, F02G 1/00, F24J 2/54

(54) **INTEGRATED RANKINE-CYCLE MACHINE**
INTEGRIERTE RANKINE-PROZESSMASCHINE
MACHINE À CYCLE DE RANKINE INTÉGRÉ

(30) Priority: 10.03.2009 IT PN20090019
(43) Date of publication of application: 21.03.2012
(73) Proprietor: ELETTROMECCANICA VENETA S.r.l., 37024 Negrar (VR) (IT)
(72) Inventor: MAZZA, Paolo, I-42016 Guastalla (Reggio Emilia) (IT); ZAMPIERI, Gino, I-42016 Guastalla (Reggio Emilia) (IT)
(74) Representative: Sutto, Luca
(86) International application number: PCT/EP2010/051725
(87) International publication number: WO 2010/102874

(56) References cited:
- WO-A1-95/33133
- JP-A- 2005 163 579
- US-A- 5 682 738
- US-A1- 2005 180 861

## Description

The present invention refers to an integrated, closed-cycle machine for the generation of an electric power source based on the recovery and the conversion of heat by means of a Rankine cycle.

In addition, said machine shall be provided so as to be able to operate in a fully autonomous manner for very long periods of time, shall not require any maintenance for a long time, and shall be inherently isolated from and protected against external agents or matters.

It is a commonly known fact that there is a large availability of various heat sources, in particular low-to-medium temperature ones, which are currently lost, and therefore wasted, into the environment since - given the recovery and conversion means and processes available for use nowadays - a conversion of such heat into electric energy would unavoidably turn out as excessively expensive with respect to the power produced and, as a result, such heat sources - even if they are finding some utilization, albeit to a rather limited extent, in professional applications - are scarcely used for more popular applications at a consumer level, such as in particular - but not solely - in households and the like.

The most common heat sources of the above-noted kind, to which reference is made herein in a preferential manner, are available both as a by-product of human activities and in nature.

Heat sources originating from a human activity include, for example, the heat contained in industrial waste or scrap products, and the heat contained in bio-masses if the latter are burnt.

Heat available in nature is mainly represented by the heat provided by solar radiations, which can in fact be captured, collected, converted and conveyed with the use of a variety of means as they are generally well-known in the art to such purposes.

Largely known in the art there is a number of applications of the Rankine cycle in view of both recovering the thermal energy existing in a body and subsequently using such heat to produce electric energy; in this connection, a preferred embodiment is based on the use - as an expansion chamber - of a turbine of a kind as generally known as such in the art.

This solution, however, has a number of definite constraints and drawbacks, which are largely known to all those skilled in the art and may be summarized as follows:
- the rather high costs of the turbine and the related control elements,
- a need for maintenance to be provided rather frequently, along with costs and charges of various kind and nature to be sustained in connection therewith, and
- above all, a major limitation connected with the use of a turbine derives from the fact that the highest efficiency of the turbine is obtained at a definite flowrate of the working fluid in the expansion phase, as well as at an equally definite speed of rotation, wherein the efficiency of the turbine is liable to decrease to quite dramatic an extent if such rotating speed varies even by quite slight an extent from said optimum value.

Such limitation can be most readily appreciated to be usually unacceptable when use is made of heat sources, the thermal output of which is widely variable, as this occurs in the afore-exemplified cases, actually.

In view of doing away with such kind of drawback, a largely known practice is based on the use - as an expansion chamber - of a common cylinder, within which there is provided a respective piston adapted to slide in a sealed manner therein, said piston being in turn connected to a related piston or connecting rod, from which the converted power is then taken for practical use with the aid of mechanical means.

This mode of embodying a Rankine cycle proves in particular advantageous if the machine that operatively performs the same Rankine cycle is associated to or integrated with another machine that uses the motive power being generated and output by said Rankine-cycle engine.

Known for instance from the US patent publication no. 4,720,978 is the use of solar heat by means of a Rankine-cycle engine to provide a machine for pumping liquids, especially water or oil, in regions in which electric energy is not available, or wherever a continuous attendance of power generating stations is impracticable.

The liquid pumping machine described in the above publication proves particularly advantageous, since it uses - as the expansion chamber for the Rankine cycle - a cylinder provided with a double-acting piston, wherein the free end of the driving shaft of the same piston is applied to a second piston of a second cylinder that is connected thereto and operates as a pump.

Such solution is found to be particularly simple and advantageous, also due to the fact that it is based on a construction featuring a considerable extent of integration involving a number of basic functional members thereof; however, as hinted hereinbefore, it relies upon the so-called mechanical analogy for its operation, as well as a connection between two cylinders; furthermore, it cannot be used to any advantageous effect when a source of electric energy has to be provided, actually.

Known from the US patent publication no. 5,088,284 is a method for providing a compressor obtained by integrating a Stirling engine with a machine that uses the Rankine cycle, which in turn operates by using the energy from a heat source of a generic nature and, preferably, the heat from solar radiations.

Even this solution may be considered as being a fully advantageous and practicable one; furthermore, it is sensibly compact in its construction. However, even in this case there is a practical drawback in that it is limited to the sole function or duty it is designed for, i.e. the operation of a gas compressor.

Disclosed in the US patent publication no. 4,571,946 is an internal combustion engine provided with a rotating and driving shaft for the transmission of the force being produced, wherein the heat contained in the exhaust gases of the engine is recovered by a rotary element operating on a Rankine cycle; this rotary element is connected with and acts upon said main rotating and drive shaft so as to increase the torque thereof and, as a result, ultimately increase the energy efficiency of the entire engine.

Anyway, even such solution turns out as being optimized just in view of the particular use it is intended for, and it cannot be transferred to applications involving power generation in any simple and direct manner.

Again, from the disclosure in the US patent publication no. 4,901,531 there is known an integrated Diesel-Rankine system, in which a Diesel engine is provided with a plurality of cylinders operating in a basically conventional manner.

At least one of these cylinders is not used for carrying out the Diesel cycle; quite on the contrary, it is used as the expansion chamber of a fluid that is previously vaporized by making use of the heat recovered from the exhaust gases from the other cylinders that work according to the Diesel cycle.

This solution, which is explicitly suggested for use in particular when the Diesel engine is working under full load conditions, proves therefore most advantageous in view of increasing the efficiency of the entire engine. Anyway, even in this case the effect being provided by the arrangement is not particularly aimed at or particularly advantageous in connection with a power generation duty.

Known from the disclosures in JP 10252558, JP 10252557 and JP 10259966 there are various technical solutions and related arrangements, which use the Rankine cycle to a variety of different purposes, or various combinations of machine embodiments aimed at optimizing the Rankine cycle; however, none of these technical solutions and arrangements is found to be particularly advantageous for power generation duties, especially when the thermal energy used in the cycle is delivered and made available under widely varying conditions.
US5682738 shows a machine with a reactor treating waste water mixed with compressed air. Reacted fluid goes into a first cylinder where it expands and then is discharged in a condenser. A second cylinder has a piston connected to the piston of first cylinder and serves to form said compressed air.

It would therefore be desirable, and it actually is a main object of the present invention, to provide a kind of Rankine-cycle machine, which uses a heat source of a general nature and featuring a wide variability of the heat output delivered to the cycle, and which performs as a power generating plant capable of ensuring a power supply source that is capable of operating for long periods of time without requiring any maintenance, while forming a highly integrated and compact unit.

According to the present invention, this and further aims are reached in a machine operating according to the Rankine cycle, as integrated with a power generator, which is embodied to incorporate and operate according to the characteristics and features as recited in the appended claims. Anyway, features and advantages of the present invention will be more readily understood from the detailed description that is given below by way of non-limiting example with reference to the accompanying drawings, in which:
- Figure 1 is a perspective, exploded view of a part of a machine according to the present invention;
- Figure 2 is a median cross-sectional view along two main axes X and Z of the machine shown in Figure 1, in a definite instant in the operation thereof, when the piston 2 has moved to a point close to the top dead centre;
- Figure 3 is a second view similar to the one in Figure 2, but with the same piston 2 lying close to the bottom dead centre in this case;
- Figure 4 is a perspective, partially cut-away view of a sub-assembly including some of the basic component parts of the machine according to the present invention, as viewed in the state shown in Figure 2;
- Figure 5 is a perspective view similar to the view in Figure 4, but relating to the state shown in Figure 3, as well as with the addition of a further component part (i.e., the body 17);

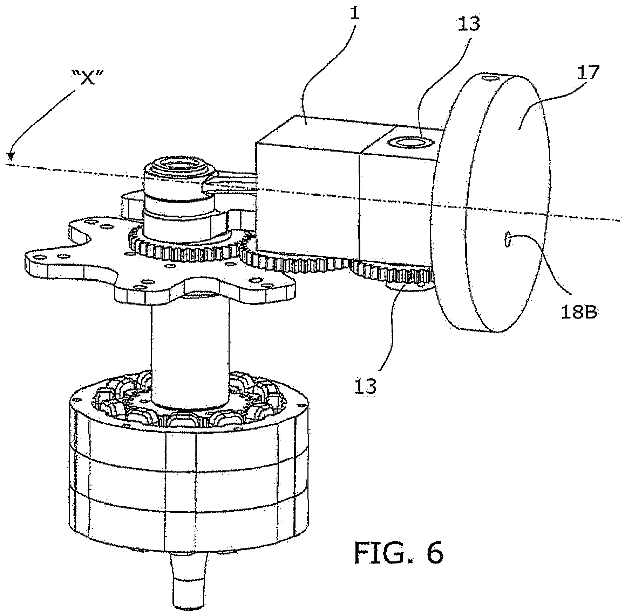

- Figure 6 is a similar view as the two preceding ones, wherein the component parts are however no longer viewed in a cut-away representation, but rather from outside;

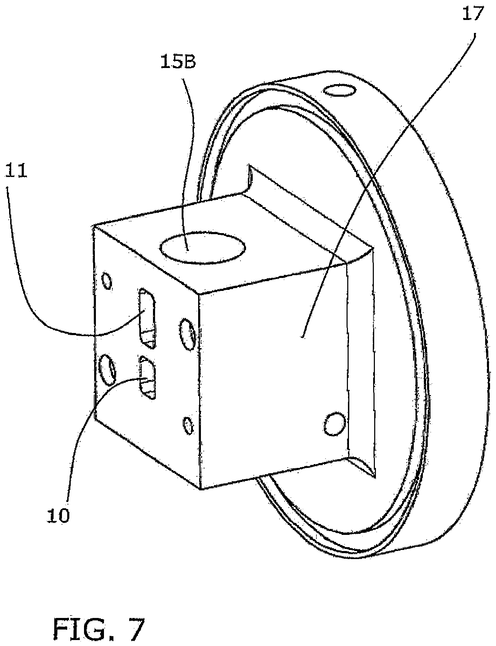

- Figure 7 is a perspective view of a specific component part included in the representation of Figure 5;

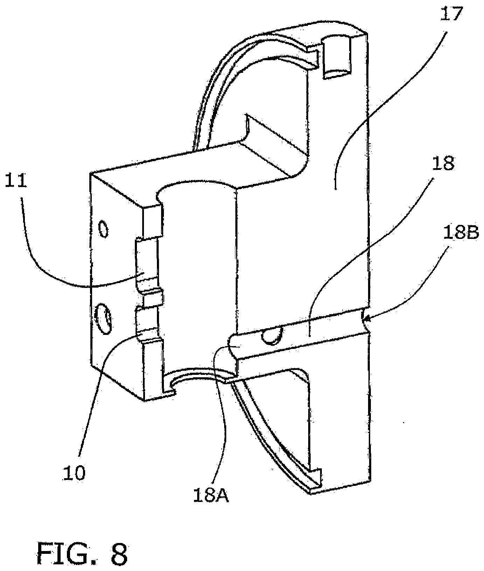

- Figure 8 is a perspective, median cross-sectional view of the component part shown in Figure 7;
- Figure 9 is a schematic view of a basic connection diagram of an arrangement providing for a preferred utilization of the machine according to the present invention;
- Figures 9A, 9B, 9C and 9D are schematic views of respective connection diagrams of the machine according to the present invention, as connected to different kinds of heat sources and different kinds of cooling sources, all of them represented in a symbolical manner.

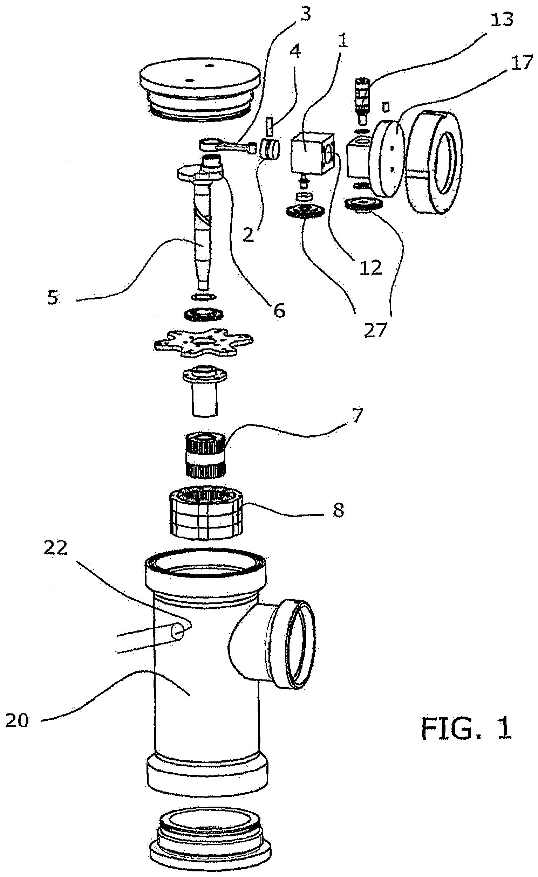

With reference to Figures 1 through to 8, a machine operating on the Rankine cycle according to the present invention comprises:
- a cylinder 1, within which there is accommodated a piston 2 capable of sliding in a sealed manner in said cylinder, and which defines - jointly with said piston - a substantially sealed inner chamber 12,
- a connecting or piston rod 3 connected at an end thereof to said piston 2 by means of a proper piston pin 4,
- a main shaft 5 provided to include portions in the form of crank webs 6, on one of which there is applied - in a manner largely known as such in the art - the other end of the connecting rod 3,
- a power generator provided with a rotor 7 and a related stator 8.

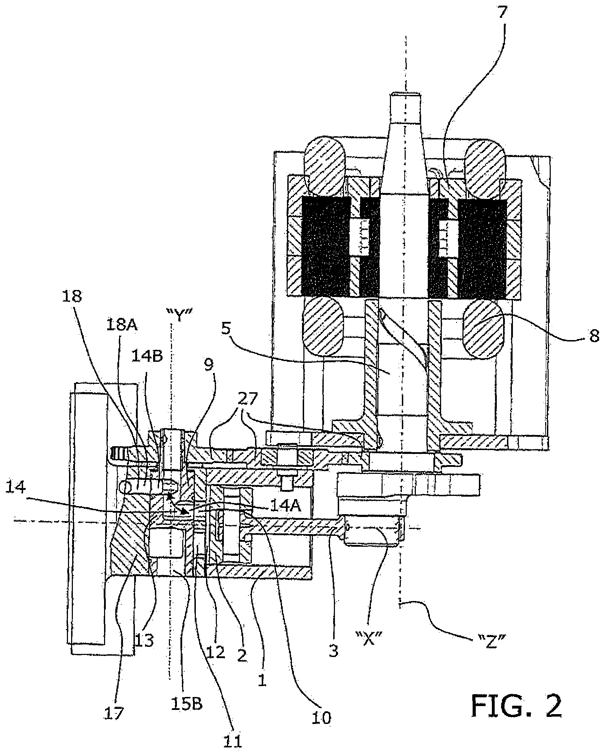

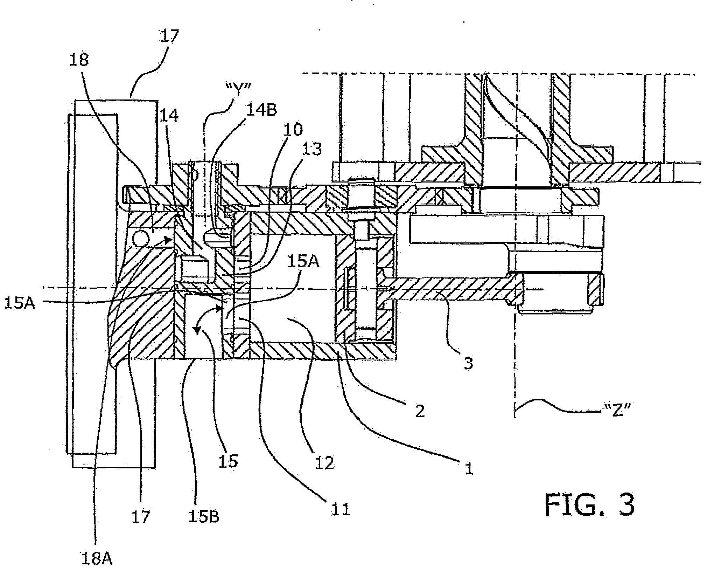

On the head 9 of said cylinder 1 there are provided two distinct through-bores 10, 11 (Figures 2 and 3), which enable said inner chamber 12 to communicate with the outside of the cylinder 1 via such means as they shall be described in greater detail further on.

The working fluid that may be used for said Rankine-cycle machine, and which fills up said inner chamber 12 to be then ejected therefrom, is a thermodynamic fluid of a kind as largely known as such in the art, and preferably is an organic fluid of the ORC (Organic Rankine Cycle) type.

Provided at a location corresponding to said cylinder head 9 there is a body 17 featuring a cylindrical cavity, in which there is accommodated a rotating valve 13, whose axis of rotation X is oriented in a direction orthogonal to the axis X of the cylinder 1.

Such rotating valve 13 is provided with two inner through-channels, i.e. a suction channel 14 and an exhaust channel 15.

Said suction channel 14 is shaped so that, when said valve 13 rotates into a given, pre-defined position, the suction port 14A thereof on the side facing the cylinder 1 comes exactly into a location in front of one of the afore-mentioned through-bores, namely the inlet one 10.

In that same position of the rotating valve 13, the opposite port 14B of the channel 14 comes to be located so as to directly flow - through a bore 18A - into a conduit 18 provided inside another body, which may in an advantageous manner be formed by an appropriate portion of said same body 17.

Said conduit 18 opens into the outside via a respective port 18B.

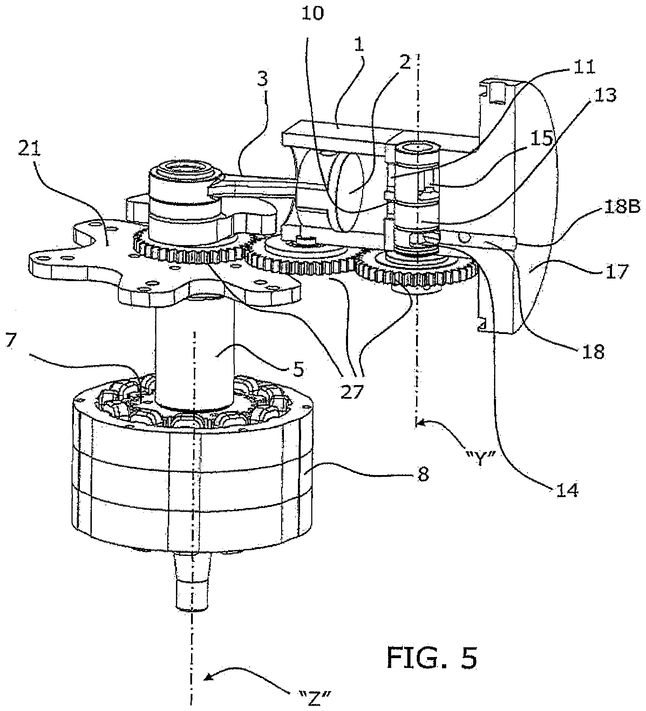

As a result, in said position of rotation of the rotating valve 13 (Figures 2 and 5), the inner chamber 12 of the cylinder 1 is enabled to communicate with the outside, so that a flow of gas from the outside is able to flow into said inner chamber 12 by passing through said port 18B, said conduit 18, said port 18A, said port 14B, said suction channel 14 and the port 14A thereof and said through-bore 10 in a sequence.

As far as the flowpath is concerned, which is followed by the gas when exiting from the interior of the chamber 12 and moving towards the outside, a similar scheme may of course be implemented.

The exhaust channel 15, through which the gas is exhausted from said inner chamber 12, is provided with a respective exhaust port 15A, which, at a given, precisely pre-defined position of rotation of said rotating valve 13, comes to be located exactly in front of said exhaust through-bore 11.

However, for reasons that shall be better explained further on, there is preferred that said exhaust channel 15 be provided with an opposite through-bore 15B that opens directly into the outside of the cylinder, without any need for it to therefore pass through said body 17, as represented in Figure 3.

The geometrical configuration, the architecture and the size of the above-described component parts and details are such that, when at a first position of the rotating valve 13 said channel 14 establishes a communication between the outside and the inner chamber 12 (via the conduits 14 and 18), the same rotating valve also cuts off the exhaust flowpath from the inner chamber 12 towards the outside, owing to said rotating valve 13 closes off also the passage from said exhaust through-bore 11 to the exhaust channel 15 in the same valve (see Figure 2).

And this is true also the other way round, of course, as this is exemplarily shown in Figure 3.

On the other hand, the way in which rotating valves are used and operate in view of feeding or supplying the interior of a cylinder, in which a piston is sliding in a reciprocating manner, is largely known as such in the art, so that it shall not be explained herein to any further detail for reasons of brevity and greater simplicity.

There are furthermore provided drive means for rotatably driving the above-mentioned rotating valve, as this shall be described in greater detail further on, in such manner as to ensure that these means, as combined with the geometrical and dimensional configuration of the above-described members and elements, are adapted to cause - at each complete rotation of the main shaft 5 - said port 14A to rotate by a short interval, comprised within that same complete rotation, in front of said through-bore 10, so as to enable the inner chamber 12 of the cylinder to be permanently communicating with the outside of said cylinder via said channel 14 and said conduit 18, and the respective ports at the ends thereof.

In a subsequent interval of the same rotation, said valve 13 shuts off the access to said inlet bore 10 and sets said inner chamber 12 in a state, in which it communicates with the outside of the cylinder.

In other words, said inner chamber 12 is switched into alternately communicating with the two inlet and exhaust conduits 14 and 15 according to a sequence that is synchronized with the displacement and the position of the piston 2, and such opening/closing sequence of the inlet through-bore 10, along with the similar opening/closing sequence of the other through-bore 11, are driven by the rotating main shaft 5 and are comprised within each single and same rotation thereof.

As a result, when a gas is admitted - at a suitable pressure and in the manner as this has been described hereinbefore - into said inner chamber 12, there occurs a reciprocating movement of said piston 2 within said cylinder 1; having provided the crank web portion 6 as described afore, the latter is effective in converting such reciprocating movement of the piston into a rotary motion of said same main shaft, which can therefore be used to drive an electric rotary motor of a general type comprised of a rotor 7, e.g. press-fitted onto said main shaft 5, and a stator 8, both of them largely known as such in the art.

This rotary electric motor then generates one or more electric voltages adapted to supply - via appropriate electric connections (not shown) - power-using devices that may be provided in a wide variety of kinds and forms to a wide variety of purposes, uses and applications.

Therefore, if the admitted gas is a thermodynamic fluid, preferably of an ORC kind as this is largely known as such in the art, flowing in from an evaporator means at a suitable pressure, owing to its having been heated up by a heat source of a general kind, what is obtained is a machine that uses the Rankine cycle in a particularly efficient manner.

As far as the recovery of the gas exhausted from the cylinder 1 via the through-bore 11 and the rotating valve is concerned, the related aspect shall be discussed in greater detail further on.

The advantage of the above-described arrangement lies in the fact that the rotating valve offers a number of real and remarkable advantages over the usual inlet and exhaust function based on the use of stem or needle valves, wherein such advantages may be summarized as follows:
- a very high level of reliability,
- no wear or tear of the parts involved in the process and, as a result, very limited maintenance requirements,
- substantially no need for adjustments and further "calibrations",
- reduced energy input and usage, since a solely rotary motion is produced and used, actually;
- in addition - and this is another substantial reason why a rotating valve is preferred in the application - it should be noticed that the solution based on the use of the traditional stem or needle valves, with the related tappets, camshaft, etc., is basically preferred when the gases to be transferred are very hot; in fact, the rotating valve is inherently vulnerable to such high temperatures, since the gas that unavoidably leaks out between the same valve and the related apertures in the head of the cylinder would come into contact with the lubricant used there, thereby wearing it out in a very short time.

On the contrary, in the Rankine cycle described above, when use is made of fluids heated to a low-to-medium temperature reaching up to 250°C at the most, the above-noted drawback does not show up at all, so that there is no counter-indication left to the use of the rotating valve, which can therefore be applied without any risk at all, while taking the most out of the inherent advantages thereof.

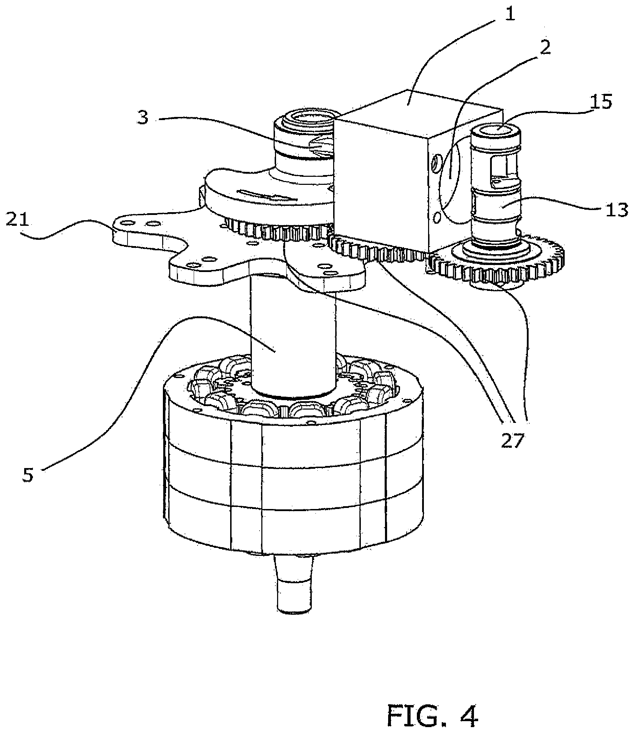

Some advantageous improvements and modifications in the embodiment of the present invention can anyway be additionally introduced or implemented as a further improvement of the above-described solution, i.e.:
1) With reference to Figures 3, 4 and 5, it can be readily appreciated that it is necessary for the rotating valve 13 to be able to rotate in synchronism with the displacement motion of the piston, so that the suction or inlet through-bore 10 is practically able to always open when the piston is in a pre-established position thereof, typically when it reaches angles - of either advance or lag - relative to the top dead centre, which depend on the ratio of the operating pressures to each other, and is further able to be closed after a pre-defined fraction of time, before the piston reaches down to the bottom dead centre; a similar situation - albeit in an inverted sequence, of course - shall be ensured to occur also as far as the opening and closing of the exhaust through-bore 11 is concerned.

To this purpose, said main shaft is connected to said rotating valve 13 via an assembly 27 of kinematical members, including gears, pinions, idler gears, and the like, which are adapted to act upon the drive shaft 19 used to rotatably drive the rotating valve 13, wherein part of said assembly is preferably housed in said same body 17, so as to ensure that the above-noted conditions will anyway occur and apply.

Since the main shaft performs a complete rotation under a double both upward and downward stroke of the piston, all it takes is to provide said kinematical assembly and the related mechanisms so that to a revolution of the main shaft there will correspond a single revolution of the rotating valve that will cause both the inlet or suction flowpath via the through-bore 10 to open and close and then the exhaust flowpath via the through-bore 11 to open and close in turn.

Other solutions departing from the above-described one may of course be implemented, such as those based on the use of either a rotating valve having the axis of rotation thereof extending parallel to the axis X of the cylinder, or two distinct rotating valves; anyway, the selection of such valves and the synchronization thereof are fully within the ability of those skilled in the art, so that a detailed description thereof shall be omitted.

The solution based on the provision of a single rotating valve 13, whose axis of rotation Y extends orthogonally to the axis X of the cylinder, has therefore been given the preference, and has been described and illustrated accordingly, since it allows for easy motion transmission from the main shaft 5.
2) A second improvement is implemented as follows: with reference to Figures 1, 4 and 5, all parts and members described above, i.e. said cylinder 1, said rotating valve 13, said kinematical assembly 27, and said power generator 7, 8 are accommodated and enclosed in a suitable sealed casing 20, within which they are supported and secured with the aid of appropriate fastening means, such as brackets 21, bolts, and the like.

The reason behind the selection of such option is a three-fold one, as this will be indicated below.

In the first place, the circumstance that a rotating valve is being used unavoidably implies a slight loss of gas leaking into the environment outside of the same valve and the cylinder 1. For such loss of leaking gas to be recovered, a practical need therefore arises for the entire cylinder to be enclosed - jointly with all parts and assemblies connected therewith - within a casing, which shall of course have a sealed construction, and shall further include both gas suction or inlet provisions and gas exhaust provisions thereinside.

This solution can obviously be implemented and obtained in the desired manner by making use of the casing 20 described above.

As far as the selected option to have also the mechanical part of the whole assembly, i.e. the connecting rod 3, the main shaft 5, as well as the power generator with its stator and rotor, enclosed in said sealed casing 20 is then concerned, it can readily be appreciated to proceed as a practically forced, unavoidable choice, since any different solution would prove much more difficult and expensive to implement, considering the need for the above-cited parts and members installed outside of said casing 20 to be in this case duly insulated.

In the second place, it should be considered that if the gas being exhausted from the inner chamber 12 of the cylinder 1, due to the action of the piston stroke as it moves upwards in the direction of the head of the cylinder, would be directly conveyed into the outside environment, it would carry also those oil particles with it, which are always unavoidably included in the thermodynamic gas, and this would prevent the same oil from duly separating from the fluid, thereby ultimately impairing the properties of the same fluid in the long run.

In the third place, it should be further considered that the power generator, comprising the rotor 7 and the stator 8, tends to obviously heat up when operating, so that, for said generator to be safely prevented from over-heating to any excessive extent, it must be duly cooled.

In view of doing away with both above-noted drawbacks, the exhaust conduit 15 of the rotating valve 13 opens in an advantageous manner directly into the inner volume of the sealed casing 20, as this is symbolically represented in Figure 2, instead of being directly connected with the outside of the casing via the body 17, as this on the contrary occurs in the case of the suction conduit 14 of the same valve 13.

Therefore, the exhaust through-bore 11 is not accompanied by any corresponding exhaust conduit conveying the gas discharged by the piston directly outside the casing 20; quite on the contrary, upon flowing through said exhaust port 11 and, of course, the related conduit 15 in the rotating valve 13, the gas flows immediately into the interior of the sealed casing 20, from which it flows then out in a regular manner through a proper outlet mouth 22 that opens into a proper gas return conduit.

The gas then expands within the inner volume of the sealed casing 20 and, as a result, a two-fold result can be achieved in that the oil in the gas is able to spontaneously drop onto the bottom of said casing and, therefore, separate from the gas, while the latter is furthermore able to effectively act as a cooling fluid for the power generator enclosed in the same sealed casing 20.

Finally, as a last, albeit not less significant reason to be cited in this connection, it should be stressed that said casing 20 constitutes an ideal means in view of having the entire inventive machine enclosed and contained therein, since its nature of hermetically sealed casing practically prevents it from having accessible mechanical or electrical parts, and since functional and operating machine parts can be arranged and positioned in a stable and definitive manner thereinside, without any risk for them to undergo undue tampering from outside.

As a result, a machine is provided, which - when viewed from outside - looks out exactly as a single hermetically sealed casing exposing solely the unavoidably required connection fittings to view, i.e. the two suction and exhaust ports for the thermodynamic gas and the electrical connections for the generated power to be output and sent to the using load.

Fully apparent should at this point be the fact that said inlet mouth (18B), as cited hereinbefore, is provided in the wall of said casing 20 so that the thermodynamic fluid is able to flow therethrough to reach into said inlet channel 14 in the rotating valve 13 and the related outlet or suction port 14A, and eventually - through said inlet through-bore 10, into the inner chamber 12 of the cylinder 1.

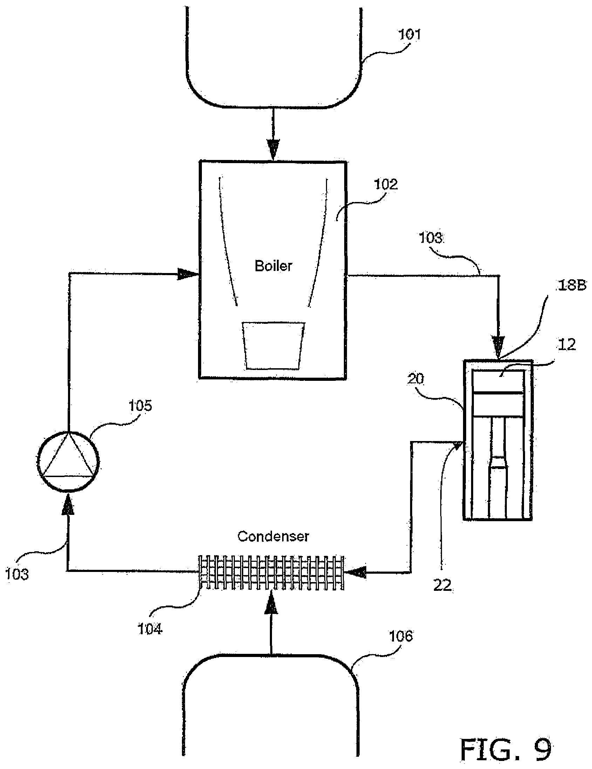

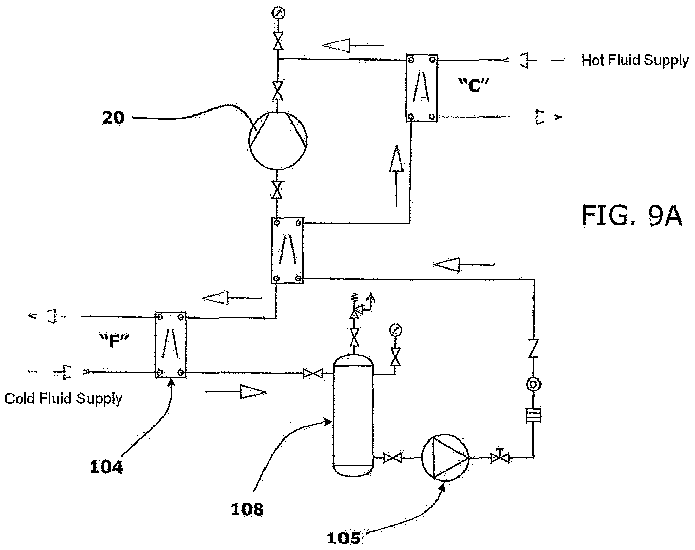

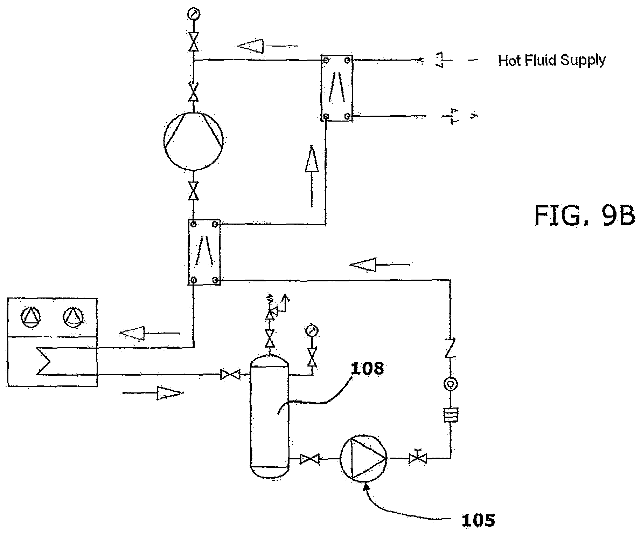

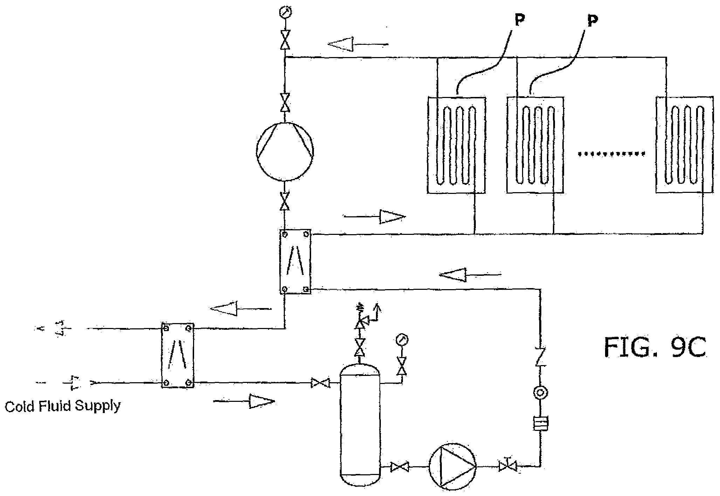

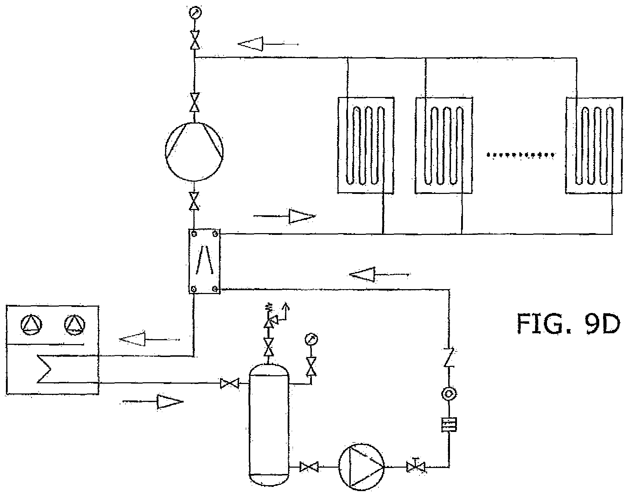

The operation of the inventive machine as it has been described above is as follows, although it may be assumed to have already been substantially figured out by the reader: with reference to Figure 9, the hot reservoir 101 (which can in principle be a heat source of any kind) heats up a boiler 102, commonly referred to also as the evaporator, which contains the thermodynamic fluid used for the Rankine cycle. This fluid is then heated up until it is brought to evaporation, while at the same time increasing the pressure thereof, and flows through a delivery conduit 103, from which it is let into said sealed casing 20 through the afore-cited inlet mouth 18A thereof located in the wall of said sealed casing 20, and in particular through the conduit 18, the channel 14 in the rotating valve 13, said exhaust conduit 15 and said through-bore 10 into said inner chamber 12, in which it is able to expand owing to the higher pressure thereof.

Owing to such expansion effect, the piston 2 is urged to displace in a reciprocating manner as this is widely known as such in the art, thereby causing said main shaft 5 to rotate and, ultimately, driving said power generator.

The gas flow is then exhausted by the piston through said exhaust through-bore 11 to flow into the sealed casing 20, from which it eventually flows out through said outlet mouth 22.

From said outlet mouth, the same conduit 103, which now works as a return conduit, conveys the gas into an appropriate condenser 104, in which the gas is condensed, frequently by means of a so-called cold reservoir 106; then, by the action of a pump 105, it flows back into said boiler 102.

In an advantageous manner, said main rotating shaft 5 is directly press-fitted on to the rotor 7; as a result, the axis of rotation Z of said shaft 5 turns out as being substantially orthogonal to said axis X of the cylinder 1 and, therefore, it turns also out as being parallel to the axis of rotation Y of the rotating valve 13.

The described solution of a machine adapted to be used to power generation purposes may be advantageously applied and put to good account in a number of circumstances and environments that may also differ quite a lot from each other; with reference to Figure 9A, the heat supply source C may be constituted by an industrial waste water or flue exhaust system, whereas the heat exchanger may use a cold source F, which may for instance be constituted by some watercourse, or - as this is shown in Figure 9B - an ambient-air condenser, if conditions are such as to allow it. Similarly, Figures 9C and 9D illustrate similar situations, wherein the hot source is however constituted by a battery of solar panels P in this case.

Shown in these Figures 9A through to 9D there is also the provision, and the related connection in the circuit, of a storage reservoir 108 located between the condenser 104 and the pump 105; the role played by this storage reservoir is quite an important one in the thermodynamic circuit considered, since the liquid that has just been condensed in the condenser is at a temperature lying just slightly below the condensation temperature; therefore, if the pump 105 is a pump of a conventional type, or an impeller-type pump, the rotation of the blades would cause a negative pressure condition to be created on the suction side of the pump, under an abrupt drop in pressure, and might therefore cause the liquid to evaporate to thereby trigger the detrimental cavitation corrosion effect.

Exactly in view to prevent such situation from occurring, said storage or buffer reservoir 108 is introduced in the circuit as explained above on the ground that on the bottom of such reservoir there is then collected an amount of liquid, in which the conduit leading to the pump 105 is submerged for it to be able to ensure a continuous supply of liquid at an adequate pressure at the inlet of the pump 105.

The ultimate result is that the main shaft 5 is caused to rotate.

## Claims

1. A machine for the conversion of thermal energy into electric energy, and comprising:
- a cylinder (1) wherein a related piston (2) is lodged and slides, and a variable volume chamber (12),
- a connecting-rod (3) engaged to said piston and to which a related main shaft (5) is engaged,
wherein said cylinder is fed on his head through two distinct openings, respectively on inlet (10) and on outlet (11), with a thermodynamic fluid flow and
wherein at least a rotating valve (13) is arranged, which is provided with at least:
- an inlet through-channel (14) able of allowing the selectively controllable communication, through said inlet opening (10), between an inlet conduit (18) and the inner chamber (12) of said cylinder (1) and- an outlet through channel (15) able of allowing the gas flow from the inner chamber (12) outside of said cylinder (1) through said outlet opening (11);
**characterized by** the fact that the machine is a closed cycle machine working according to the Rankine cycle and comprises an electric generator, including a rotor (7) and a related stator (8), activated by said main shaft.

2. Machine according to claim 1, **characterized in that** said rotating valve (13) is operated by a plurality of motion transmission members (27), connected and activated by said main shaft (5).

3. Machine according to claim 1 or 2, **characterized in that** it includes:
a. an evaporator (102), heated by a hot reservoir (101), the evaporator containing the thermodynamic fluid used for the Rankine cycle and being configured for heating the fluid until it is brought to evaporation, while at the same time increasing the pressure thereof,
b. a delivery conduit (103), from which fluid is let into the inlet conduit (18), the through channel (14) in the rotating valve (13), and via said inlet opening (10) into said inner chamber (12), in which it is able to expand owing to the higher pressure thereof,
c. a return conduit (103), conveying the fluid into a condenser (104), in which the fluid is condensed,
d. a pump (105), which flows fluid back into said evaporator (102).

4. Machine according to any of the previous claims, **characterized in that** said rotating valve (13) rotates around an axis (Y) which is substantially orthogonal to the axis (X) of said cylinder (1).

5. Machine according to any of the previous claims, **characterized in that** on the cylinder (1) head a body (17) is arranged, which is provided with an inner cavity able of lodging said rotating valve (13), and **in that** said body (17) is able to put into communication said inlet channel (14) to said inlet opening (10), at a predefined rotational position of said rotating valve (13).

6. Machine according to claim 5, **characterized in that** said body (17) is able to put into communication said outlet channel (15), inside said valve (13), to said outlet opening (11), and **in that** said outlet channel (15) opens outside of said cylinder (1) without passing through said body (17).

7. Machine according to claims 5 or 6, **characterized in that** said cylinder, said main shaft, said motion transmission devices, said electric generator, said rotating valve (13) are entirely contained inside a sealed container (20).

8. Machine according to claim 7, **characterized in that** said body (17) closes a portion of the outer surface of said container (20), and **in that** it is provided with an inlet mouth (18B) entering into a conduit (18) which lets, at a pre-defined rotational position of said valve (13), into said inlet channel (14).

9. Machine according to claim 8, **characterized in that** said container (20) is provided with an outlet mouth (22) communicating the inside of said container to the outer room.

10. Machine according to any of the previous claims, **characterized in that** the rotation axis (Z) of said rotor (7) is parallel to the rotation axis (Y) of said rotating valve (13) and **in that** said rotating valve (13) rotates around an axis (Y) which is substantially orthogonal to the axis (X) of said cylinder (1).

11. Machine according to claim 1 wherein the rotating valve (13) is configured to be able to rotate in synchronism with the displacement motion of the piston (2).

12. Machine according to claim 3 comprising a storage reservoir (108) located between the condenser (104) and the pump (105), said storage reservoir (108) having a bottom for collecting an amount of liquid, in which the return conduit leading to the pump (105) is submerged for it to be able to ensure a continuous supply of liquid at an adequate pressure at the inlet of the pump (105).

13. Use of the machine according to any one of the preceding claims in closed-cycle for the generation of electric power based on the recovery and the conversion of heat by means of a Rankine cycle.

14. Use of the machine according to the preceding claim wherein the machine uses fluids heated to a temperature reaching up to 250 °C at the most.

15. A process for the conversion of thermal energy into electric energy, using the closed cycle machine according to any one of claims from 1 to 14, wherein the process comprises the following steps:
- using a heat source (101) to heat up an evaporator or boiler (102) which contains thermodynamic fluid for Rankine cycle, wherein the fluid is heated up until it is brought to evaporation, while at the same time increasing the pressure thereof,
- flowing the fluid through a delivery conduit (103) into the inlet conduit (18), the through channel (14) in the rotating valve (13), and said inlet opening (10) into said inner chamber (12), in which it is able to expand, owing to the higher pressure thereof, urging the piston (2) to displace in a reciprocating manner thereby causing said main shaft (5) to rotate and drive said power generator,
- exhausting gas flow by the piston through said exhaust outlet (11) to flow into return conduit (103),
- conveying the gas into a condenser (104), in which the gas is condensed, then,
- by the action of a pump (105), flowing the condensed fluid back into said evaporator or boiler (102).

## Patentansprüche

1. Maschine für die Umwandlung von thermischer Energie in elektrische Energie, und umfassend:
- einen Zylinder (1), wobei ein zugehöriger Kolben (2) befestigt ist und gleitet, und eine Kammer mit variablem Volumen (12),
- eine Verbindungsstange (3), welche mit dem Kolben in Eingriff steht, und, mit welcher eine zugehörige Hauptwelle (5) in Eingriff steht,
wobei der Zylinder an seinem Kopf durch zwei separate Öffnungen an einem Einlass (10) bzw. an einem Auslass (11) mit einer thermodynamischen Fluidströmung versorgt wird, und
wobei wenigstens ein Drehventil (13) angeordnet ist, welches bereitgestellt ist, mit wenigstens:
- einem Einlassdurchgangskanal (14), welcher dazu in der Lage ist, die selektive steuerbare/regelbare Verbindung durch die Einlassöffnung (10) zwischen einer Einlassleitung (18) und der inneren Kammer (12) des Zylinders (1) zu erlauben, und
- einem Auslassdurchgangskanal (15), welcher dazu in der Lage ist, die Gasströmung von der inneren Kammer (12) außerhalb des Zylinders (1) durch die Auslassöffnung (11) zu erlauben;
durch die Tatsache gekennzeichnet, dass die Maschine eine Maschine mit einem geschlossenem Kreislauf ist, welche gemäß dem Rankine-Prozess betrieben ist und einen elektrischen Erzeuger umfasst, welcher einen Rotor (7) und einen zugehörigen Stator (8) umfasst, welcher durch die Hauptwelle aktiviert wird.

2. Maschine nach Anspruch 1, **dadurch gekennzeichnet, dass** das Drehventil (13) durch eine Mehrzahl von Bewegungsübertragungselementen (27) betrieben wird, welche mit der Hauptwelle (5) verbunden sind und durch diese aktiviert werden.

3. Maschine nach Anspruch 1 oder 2, **dadurch gekennzeichnet, dass** sie umfasst:
a. einen Verdampfer (102), welcher durch ein Wärmereservoir (101) erwärmt wird, wobei der Verdampfer das für den Rankine-Prozess verwendete thermodynamische Fluid enthält und zum Erwärmen des Fluides, bis es zum Verdampfen gebracht wird, eingerichtet ist, während zur gleichen Zeit der Druck davon ansteigt,
b. eine Zufuhrleitung (103), von welcher Fluid in die Einlassleitung (18), den Durchgangskanal (14) in dem Drehventil (13) und durch die Einlassöffnung (10) in die innere Kammer (12) gelassen wird, in welcher es geschuldet dem höheren Druck davon in der Lage ist, zu expandieren,
c. eine Rücklaufleitung (103), welche das Fluid in einen Verflüssiger (104) befördert, in welchem das Fluid kondensiert wird,
d. eine Pumpe (105), welche Fluid in den Verdampfer (102) zurückführt.

4. Maschine nach einem der vorhergehenden Ansprüche, **dadurch gekennzeichnet, dass** sich das Drehventil (13) um eine Achse (Y) dreht, welche im Wesentlichen orthogonal zu der Achse (X) des Zylinders (1) ist.

5. Maschine nach einem der vorhergehenden Ansprüche, **dadurch gekennzeichnet, dass** an dem Zylinder (1) -kopf ein Körper (17) angeordnet ist, welcher mit einer inneren Kavität bereitgestellt ist, welche zum Befestigen des Drehventils (13) in der Lage ist, und, dass der Körper (17) in der Lage ist, den Einlasskanal (14) mit der Einlassöffnung (10) bei einer vordefinierten Drehposition des Drehventils (13) in Verbindung zu bringen.

6. Maschine nach Anspruch 5, **dadurch gekennzeichnet, dass** der Körper (17) dazu in der Lage ist, den Auslasskanal (15) innerhalb des Ventils (13) mit der Auslassöffnung (11) in Verbindung zu bringen, und, dass sich der Auslasskanal (15) außerhalb des Zylinders (1), ohne den Körper (17) zu durchtreten, öffnet.

7. Maschine nach Anspruch 5 oder 6, **dadurch gekennzeichnet, dass** der Zylinder, die Hauptwelle, die Bewegungsübertragungsvorrichtungen, der elektrische Erzeuger, das Drehventil (13) vollständig innerhalb eines abgedichteten Behälters (20) enthalten sind.

8. Maschine nach Anspruch 7, **dadurch gekennzeichnet, dass** der Körper (17) einen Abschnitt der äußeren Fläche des Behälters (20) schließt, und, dass er mit einer Einlassmündung (18B) bereitgestellt ist, welche in eine Leitung (18) eintritt, welche sich in den Einlasskanal (14) an einer vordefinierten Drehposition des Ventils (13) einlässt.

9. Maschine nach Anspruch 8, **dadurch gekennzeichnet, dass** der Behälter (20) mit einer Auslassmündung (22) bereitgestellt ist, welche das Innere des Behälters mit dem Außenraum in Verbindung bringt.

10. Maschine nach einem der vorhergehenden Ansprüche, **dadurch gekennzeichnet, dass** die Drehachse (Z) des Rotors (7) parallel zu der Drehachse (Y) des Drehventils (13) ist, und, dass sich das Drehventil (13) um eine Achse (Y) dreht, welche im Wesentlichen orthogonal zu der Achse (X) des Zylinders (1) ist.

11. Maschine nach Anspruch 1, wobei das Drehventil (13) dazu eingerichtet ist, in der Lage zu sein, sich synchron mit der Verstellbewegung des Kolbens (2) zu drehen.

12. Maschine nach Anspruch 3, umfassend ein Speicherreservoir (108), welches zwischen dem Verflüssiger (104) und der Pumpe (105) angeordnet ist, wobei das Speicherreservoir (108) einen Boden zum Sammeln einer Flüssigkeitsmenge aufweist, in welche die zu der Pumpe (105) führende Rücklaufleitung eingetaucht ist, um in der Lage zu sein, eine kontinuierliche Zufuhr von Flüssigkeit mit einem adäquaten Druck an dem Einlass der Pumpe (105) sicherzustellen.

13. Verwendung der Maschine nach einem der vorhergehenden Ansprüche in einem geschlossenen Kreislauf für die Erzeugung von elektrischer Energie basierend auf der Zurückgewinnung und der Umwandlung von Wärme mittels eines Rankine-Prozesses.

14. Verwendung der Maschine nach dem vorhergehenden Anspruch, wobei die Maschine Fluide verwendet, welche auf eine Temperatur, welche höchstens 250 °C erreicht, erwärmt sind.

15. Verfahren zur Umwandlung von thermischer Energie in elektrische Energie unter Verwendung der Maschine mit geschlossenem Kreislauf nach einem der Ansprüche 1 bis 14, wobei das Verfahren die folgenden Schritte umfasst:
- Verwendung einer Wärmequelle (101), um einen Verdampfer oder Boiler (102) zu erwärmen, welcher thermodynamisches Fluid für den Rankine-Prozess enthält, wobei das Fluid erwärmt wird, bis es zur Verdampfung gebracht wird, während sich zur gleichen Zeit der Druck davon erhöht,
- Strömen des Fluides durch eine Zufuhrleitung (103) in die Einlassleitung (18), den Durchgangskanal (14) in dem Drehventil (13) und die Einlassöffnung (10) in die innere Kammer (12), in welcher es geschuldet dem höheren Druck davon in der Lage ist, zu expandieren, wodurch der Kolben (2) gezwungen wird, sich in einer hin- und herbewegenden Weise zu verlagern, wodurch die Hauptwelle (5) veranlasst wird, sich zu drehen und den Energieerzeuger anzutreiben,
- Ausstoßen einer Gasströmung mittels des Kolbens durch den Ausstoßauslass (11), um in eine Rücklaufleitung (103) zu strömen,
- Fördern des Gases in einen Verflüssiger (104), in welchem das Gas verflüssigt wird, dann
- Strömen des verflüssigten Fluides zurück in den Verdampfer oder Boiler (102) durch die Betätigung einer Pumpe (105).

## Revendications

1. Machine de conversion d'énergie thermique en énergie électrique, et comprenant :
- un cylindre (1) dans lequel un piston associé (2) est logé et coulisse, et une chambre à volume variable (12),
- une tige de raccordement (3) en prise avec ledit piston et avec laquelle un arbre principal associé (5) est engagé,
dans laquelle ledit cylindre est alimenté sur sa tête à travers deux ouvertures distinctes, respectivement sur l'orifice d'entrée (10) et sur l'orifice de sortie (11), d'un écoulement de liquide thermodynamique et
dans laquelle au moins une vanne rotative (13) est disposée, qui est prévue avec au moins :
- un canal traversant d'orifice d'entrée (14) capable de laisser la communication sélectivement contrôlable, à travers ladite ouverture d'orifice d'entrée (10), entre un conduit d'entrée (18) et la chambre interne (12) dudit cylindre (1) et - un canal traversant d'orifice de sortie (15) capable de laisser l'écoulement de gaz depuis la chambre interne (12) hors dudit cylindre (1) à travers ladite ouverture d'orifice de sortie (11);
**caractérisée par le fait que** la machine est une machine à cycle fermé fonctionnant selon le cycle Rankine et qui comprend un générateur électrique, comprenant un rotor (7) et un stator associé (8), activé grâce audit arbre principal.

2. Machine selon la revendication 1, **caractérisée en ce que** ladite vanne rotative (13) est actionnée par une pluralité d'éléments de transmission de mouvement (27), connectés et activés par ledit arbre principal (5).

3. Machine selon la revendication 1 ou 2, **caractérisée en ce qu'**elle comprend :
a. un évaporateur (102), chauffé par un réservoir chaud (101), l'évaporateur contenant le liquide thermodynamique utilisé pour le cycle Rankine et étant configuré pour chauffer le liquide jusqu'à ce qu'il soit conduit à l'évaporation, tout en élevant dans le même temps sa pression,
b. un conduit de distribution (103), à partir duquel le liquide est laissé dans le conduit d'orifice d'entrée (18), le canal traversant (14) dans la vanne rotative (13), et *via* ladite ouverture d'orifice d'entrée (10) dans ladite chambre interne (12), dans laquelle il peut s'expanser dû à sa pression supérieure,
c. un conduit de retour (103), transportant le liquide dans un condenseur (104), dans lequel le liquide est condensé,
d. une pompe (105), qui fait s'écouler le liquide en retour dans ledit évaporateur (102).

4. Machine selon l'une quelconque des revendications précédentes, **caractérisée en ce que** ladite vanne rotative (13) tourne autour d'un axe (Y) qui est sensiblement orthogonal par rapport à l'axe (X) dudit cylindre (1).

5. Machine selon l'une quelconque des revendications précédentes, **caractérisée en ce que** sur la tête du cylindre (1) un corps (17) est disposé, qui est prévu avec une cavité interne capable de loger ladite vanne rotative (13), et **en ce que** ledit corps (17) est capable de placer en communication ledit canal d'orifice d'entrée (14) avec ladite ouverture d'orifice d'entrée (10), au niveau d'une position de rotation prédéfinie de ladite vanne rotative (13).

6. Machine selon la revendication 5, **caractérisée en ce que** ledit corps (17) est capable de placer en communication ledit canal d'orifice de sortie (15), à l'intérieur de ladite vanne (13), avec ladite ouverture d'orifice de sortie (11), et **en ce que** ledit canal d'orifice de sortie (15) s'ouvre à l'extérieur dudit cylindre (1) sans passer à travers ledit corps (17).

7. Machine selon les revendications 5 ou 6, **caractérisée en ce que** ledit cylindre, ledit arbre principal, lesdits dispositifs de transmission de mouvement, ledit générateur électrique, ladite vanne rotative (13) sont entièrement contenus à l'intérieur d'un récipient hermétiquement fermé (20).

8. Machine selon la revendication 7, **caractérisée en ce que** ledit corps (17) enferme une partie de la surface externe dudit récipient (20), et **en ce qu'**elle est prévue avec une bouche d'orifice d'entrée (18B) entrant dans un conduit (18) qui laisse, au niveau d'une position de rotation prédéfinie de ladite vanne (13), dans ledit canal d'orifice d'entrée (14).

9. Machine selon la revendication 8, **caractérisée en ce que** ledit récipient (20) est prévu avec une bouche d'orifice de sortie (22) faisant communiquer l'intérieur dudit récipient vers la chambre externe.

10. Machine selon l'une quelconque des revendications précédentes, **caractérisée en ce que** l'axe de rotation (Z) dudit rotor (7) est parallèle à l'axe de rotation (Y) de ladite vanne rotative (13) et **en ce que** ladite vanne rotative (13) tourne autour d'un axe (Y) qui est sensiblement orthogonal par rapport à l'axe (X) dudit cylindre (1).

11. Machine selon la revendication 1 dans laquelle la vanne rotative (13) est configurée pour pouvoir tourner de manière synchronisée avec le mouvement de déplacement du piston (2).

12. Machine selon la revendication 3 comprenant un réservoir de stockage (108) localisé entre le condenseur (104) et la pompe (105), ledit réservoir de stockage (108) ayant un fond pour recueillir une quantité de liquide, dans laquelle le conduit de retour conduisant à la pompe (105) est submergé pour lui permettre de pouvoir assurer une alimentation continue de liquide sous une pression adéquate au niveau de l'orifice d'entrée de la pompe (105).

13. Utilisation de la machine selon l'une quelconque des revendications précédentes dans un cycle fermé pour la production de puissance électrique sur la base d'une récupération et d'une conversion de chaleur à l'aide d'un cycle Rankine.

14. Utilisation de la machine selon la revendication précédente, dans laquelle la machine utilise des liquides chauffés à une température atteignant jusqu'à 250°C au plus.

15. Procédé de conversion d'énergie thermique en énergie électrique, en utilisant la machine à cycle fermé selon l'une quelconque des revendications 1 à 14, le procédé comprenant les étapes suivantes :
- d'utilisation d'une source de chaleur (101) pour chauffer un évaporateur ou une chaudière (102) qui contient le liquide thermodynamique pour le cycle Rankine, le liquide étant chauffé jusqu'à ce qu'il soit conduit à l'évaporation, tout en augmentant dans le même temps sa pression,
- d'écoulement du liquide à travers un conduit de distribution (103) dans le conduit d'orifice d'entrée (18), le canal traversant (14) dans la vanne rotative (13), et ladite ouverture d'orifice d'entrée (10) dans ladite chambre interne (12), dans laquelle il peut s'expanser, dû à sa pression supérieure, en obligeant le piston (2) à se déplacer d'une manière par va-et-vient conduisant de là ledit arbre principal (5) à tourner et à commander ledit générateur d'énergie,
- d'évacuation de l'écoulement de gaz par le piston à travers ledit orifice de sortie d'échappement (11) pour s'écouler dans le conduit de retour (103),
- de transport du gaz dans un condenseur (104), dans lequel le gaz est condensé, puis,
- sous l'action d'une pompe (105), d'écoulement du liquide condensé en retour dans ledit évaporateur ou ladite chaudière (102).
